# EUROPÄISCHE PATENTSCHRIFT

(11) **EP 1 310 762 B1**
(45) Veröffentlichungstag und Bekanntmachung des Hinweises auf die Patenterteilung: **13.10.2010**
(21) Anmeldenummer: 02017832.3
(22) Anmeldetag: 08.08.2002
(51) Int. Cl.: G01B 7/016, G01B 7/00, G01B 21/04, H01M 2/10

(54) **Messtaster**
Touchsensor
Palpeur de mesure

(30) Priorität: 12.11.2001 DE 10155917
(43) Veröffentlichungstag der Anmeldung: 14.05.2003
(73) Patentinhaber: Dr. Johannes Heidenhain GmbH, 83292 Traunreut (DE)
(72) Erfinder: Schopf, Reinhold, 83308 Trostberg (DE); Brandl, Sebastian, 83352 Altenmarkt (DE)
(74) Vertreter: Baumgärtel, Gunnar

(56) Entgegenhaltungen:
- DE-U1- 29 916 458
- US-A- 4 766 361
- US-A- 5 065 035
- US-A- 5 612 147

## Beschreibung

Die Erfindung betrifft einen Messtaster nach dem Oberbegriff des Patentanspruchs 1.

Ein derartiger Messtaster gemäß der US-A-5 065 035 umfasst eine elektrisch betriebene Tasteinrichtung zum Abtasten eines Messobjektes und zur Erzeugung eines entsprechenden Ausgangssignales sowie eine Batterieaufnahme, die elektrische Anschlüsse zur Kontaktierung elektrischer Kontakte einer Batterieanordnung aufweist, die die zum Betrieb der Tasteinrichtung erforderliche elektrische Energie zur Verfügung stellt.

Die elektrisch betreibbare Tasteinrichtung umfasst in der Regel ein beweglich gelagertes (auslenkbares) Tastelement, insbesondere in Form eines Taststiftes, der mit einem Antastabschnitt versehen ist, sowie eine Abtasteinheit zum Erfassen einer Bewegung des Tastelementes. Der Abtasteinheit, die zum Beispiel eine Lichtschranke mit einer Lichtquelle und einer Empfängeranordnung sowie ein dazwischen angeordnetes und am Tastelement angebrachtes Lichtschrankenelement aufweist, wird über mindestens ein elektrisches Kabel, das eine oder mehrere elektrische Leitungen aufweist, elektrischer Strom von der Batterieanordnung zum Betrieb der Lichtquelle und ggf. einer weiteren Elektronik zugeführt. Femer können mittels des elektrischen Kabels durch die Abtasteinheit erzeugte Ausgangssignale zu einer außerhalb des Messtasters angeordneten Auswerteeinheit fortgeleitet werden.

Aus der GB 2 179 744 B ist ein Messtaster mit einem Tastelement in Form eines auslenkbaren Taststiftes sowie mit einer Diodenanordnung zur Übertragung von Informationen betreffend den Zustand des Tastelementes bekannt. Zur Erzeugung der für den Betrieb dieses Messtasters erforderlichen elektrischen Energie weist der Messtaster eine Batterieaufnahme auf, in die zwei in Reihe geschaltete Batterien einlegbar sind und die mit einer Abdeckung verschließbar ist. Bei einem derartigen Messtaster besteht das Problem, dass stets Reservebatterien des in die Batterieaufnahme einzusetzenden Typs bereitgehalten werden müssen. Andernfalls kann es bei einem Ausfall der zum Betrieb des Messtasters verwendeten Batterien zu einer längeren Unterbrechung kommen, während der der Messtaster nicht verwendet werden kann. Dies gilt insbesondere dann, wenn der Messtaster mit Lithium-Batterien oder vergleichbaren Batterien betrieben wird, die zwar einerseits eine besonders lange Betriebsdauer gewährleisten, die jedoch andererseits - anders als Standardbatterien - nicht ohne weiteres beschafft werden können, sondern nur bei entsprechend spezialisierten Händlern erhältlich sind.

Der Erfindung liegt das Problem zugrunde, einen Messtaster der eingangs genannten Art zu schaffen, bei dem nach einem Ausfall der zum Betrieb des Messtasters verwendeten Batterieanordnung eine beschleunigte Wiederaufnahme des Betriebes des Messtasters ermöglicht ist.

Dieses Problem wird erfindungsgemäß durch die Schaffung eines Messtasters mit den Merkmalen des Patentanspruchs 1 gelöst.

Unter einer Batterieanordnung wird vorliegend eine Anordnung bestehend aus einer oder mehreren Batterien verstanden, die zum Betrieb des Messtasters in dessen Batterieaufnahme eingefügt wird. Unter einer Batterie wird dabei jede Einrichtung zur Umwandlung chemischer in elektrische Energie verstanden, die auswechselbar in die Batterieaufnahme des Messtasters einfügbar ist, also auch wiederaufladbare Batterien, insbesondere sogenannte Akkus.

"Aufnahme" einer Batterieanordnung bedeutet dabei, dass die entsprechende Batterieanordnung nicht nur in die Batterieaufnahme einfügbar, sondern dort derart einsetzbar ist, dass beim korrekten Einsetzen zugleich auch die Kontaktierung der entsprechenden Anschlüsse der Batterieaufnahme gewährleistet ist.

Zwei Batterieanordnungen weisen eine unterschiedliche räumliche Anordnung ihrer elektrischen Kontakte im Sinne der Erfindung auf, wenn hinsichtlich der elektrischen Kontakte der Batterieanordnung, die zur Kontaktierung der elektrischen Anschlüsse der Batterieaufnahme dienen, Unterschiede in dem Abstand und/oder der Lage der elektrischen Kontakte zueinander bestehen, und zwar In dem Zustand, in dem die Batterieanordnung in die Batterieaufnahme eingefügt ist.

Ein Unterschied hinsichtlich der äußeren Form zweier Batterieanordnungen liegt vor, wenn sich die beiden Batterieanordnungen hinsichtlich ihrer Größe (äußeren Abmessungen) oder hinsichtlich ihrer äußeren Kontur unterscheiden.

Die erfindungsgemäße Lösung hat den Vorteil, dass bei einem Ausfall der in der Batterieaufnahme befindlichen Batterieanordnung für den kurzfristigen Weiterbetrieb des Messtasters auch eine anders gestaltete Batterieanordnung in die Batterieaufnahme eingefügt werden kann. Insbesondere kann vorgesehen sein, dass bei Ausfall der üblicherweise zum Betrieb des Messtasters verwendeten Batterieanordnung mit Batterien besonders hoher Lebensdauer ersatzweise eine Standardbatterie verwendet werden kann, um den Messtaster so lange zu betreiben, bis wieder eine Batterieanordnung der bevorzugt verwendeten Art zur Verfügung steht.

Die Batterieaufnahme ist eingerichtet zur Aufnahme von jeweils genau einer der unterschiedlichen Batterieanordnungen. Es sollen die unterschiedlichen Batterieanordnungen (zumindest teilweise) jeweils in den gleichen Batteriefächern aufgenommen werden. Die Anwesenheit einer Batterieanordnung in der Batterieaufnahme verhindert dann das Einfügen einer weiteren Batterieanordnung.

Dabei ist die Batterieaufnahme eingerichtet zum Einfügen einer Batterieanordnung aus mehreren Batterien, z.B. aus zwei Batterien. Hierbei kann es sich insbesondere um 3,6 V-Lithium-Batterien mit besonders großer Lebensdauer handeln. Hierbei ist die Batterieaufnahme weiterhin eingerichtet zur alternativen Aufnahme einer Batterieanordnung, die durch eine Standardbatterie, zum Beispiel eine 9-V-Batterie (auch in Form eines Akkus), gebildet wird.

Die Batterieaufnahme ist zu einer solchen formschlüssigen Aufnahme jeder der unterschiedlichen Batterieanordnungen eingerichtet, dass beim korrekten Einfügen der Batterieanordnung die elektrischen Kontakte der Batterie derart positioniert sind, dass sie mit den zugeordneten elektrischen Anschlüssen der Batterieaufnahme in Kontakt treten

Dies wird dadurch erreicht, dass die Kontur der Batterieaufnahme in einem Teilabschnitt an die äußere Form der einen Batterieanordnung und in einem anderen Teilabschnitt an die äußere Form der anderen Batterieanordnung angepasst ist, so dass sowohl die eine als auch die andere Batterieanordnung formschlüssig in die Batterieaufnahme einsetzbar sind.

Ferner ist vorgesehen, dass die Batterieaufnahme zwei Batteriefächer aufweist, von denen das eine wahlweise zur Aufnahme einer Batterie einer ersten Batterieanordnung oder der (einzigen) Batterie einer zweiten Batterieanordnung eingerichtet ist und von denen das andere ausschließlich zur Aufnahme einer weiteren Batterie der ersten Batterieanordnung eingerichtet ist.

Im Hinblick darauf, dass Batterien in der Regel eine zylindrische oder eine rechteckige äußeren Kontur aufweisen, kann die Batterieaufnahme insbesondere eingerichtet sein zur wahlweisen Aufnahme einer Batterieanordnung mit einem mehreckigen Querschnitt oder einer Batterieanordnung mit einem abgerundeten Querschnitt.

Zur Aufnahme von Batterieanordnungen mit einer unterschiedlichen Anordnung der elektrischen Kontakte weist mindestens ein elektrischer Anschluss der Batterieaufnahme zwei oder mehr Anschlussbereiche auf, von denen bei den unterschiedlichen Batterieanordnungen jeweils einer zur Kontaktierung eines elektrischen Kontaktes mit einer vorgegebenen Polung (Plus-Pol oder Minus-Pol) dient. Die unterschiedlichen Anschlussbereiche des einen elektrischen Anschlusses der Batterieaufnahme dienen somit also nicht zur Kontaktierung unterschiedlicher Pole einer Batterieanordnung, sondern vielmehr stets zur Kontaktierung desselben Pols, jedoch bei unterschiedlichen Batterieanordnungen. Dieser elektrische Anschluss kann beispielsweise durch eine elektrische Kontaktplatte mit zwei oder mehr benachbarten Kontaktbereichen gebildet werden, wobei die unterschiedlichen Kontaktbereiche jeweils zur Kontaktierung elektrischer Kontakte mit identischer Polung, jedoch unterschiedlicher räumlicher Lage bei unterschiedlichen Batterieanordnungen dienen.

Die unterschiedlichen Anschlussbereiche des einen elektrischen Anschlusses können somit insbesondere über dasselbe Anschlusskabel mit der elektrisch betreibbaren Tasteinrichtung des Messtasters verbunden sein.

Gemäß einer Weiterbildung der Erfindung dient der eine Anschlussbereich zur Kontaktierung eines elektrischen Kontaktes einer aus zwei Batterien bestehenden Batterieanordnung und der andere Anschlussbereich zur Kontaktierung eines elektrischen Kontaktes der aus einer Batterie bestehenden Batterieanordnung, wobei die genannten elektrischen Kontakte der unterschiedlichen Batterieanordnungen jeweils den gleichen elektrischen Pol, insbesondere den Plus-Pol der jeweiligen Batterieanordnung definieren.

Um eine zuverlässige Kontaktierung der Batterieanordnung mit einem zugeordneten elektrischen Anschluss der Batterieaufnahme sicherzustellen, kann die Wand der Batterieaufnahme in der Umgebung des entsprechenden elektrischen Anschlusses eine Vertiefung aufweisen, in die ein Abschnitt der zu verwendenden Batterieanordnung einführbar ist, um eine definierte Kontaktierung des elektrischen Anschlusses sicherzustellen.

Ferner können die an der Batterieaufnahme vorgesehenen elektrischen Anschlüsse derart gestaltet sein, dass eine Verpolung (verkehrtes Einsetzen der Batterie hinsichtlich der Anordnung ihrer Pole) ausgeschlossen wird.

Wenn die Wand der Batterieaufnahme zumindest teilweise aus Metall besteht, kann diese zugleich zur Kontaktierung eines der elektrischen Kontakte, insbesondere des Minus-Poles, der jeweils eingefügten Batterieanordnung dienen. Der Kontakt kann dabei gegebenenfalls auch über ein zusätzliches leitendes Verbindungselement, zum Beispiel eine Kontaktfeder, hergestellt werden.

Weitere Merkmal und Vorteile der Erfindung werden bei der nachfolgenden Beschreibung eines Ausführungsbeispiels anhand der Figuren deutlich werden.

Es zeigen:
- Fig. 1: ein Gehäuse eines Messtasters mit einer Batterieaufnahme, in die wahlweise zwei 3, 6 Volt-Lithium-Batterien oder eine 9 Volt-Standardbatterie einführbar ist;
- Fig. 2a: das Gehäuse aus Figur 1, wobei in die Batterieaufnahme zwei 3, 6 Volt-Lithium-Batterien eingesetzt sind;
- Fig. 2b: das Gehäuse aus Figur 1, wobei in die Batterieaufnahme eine 9 Volt-Standardbatterie eingesetzt ist.

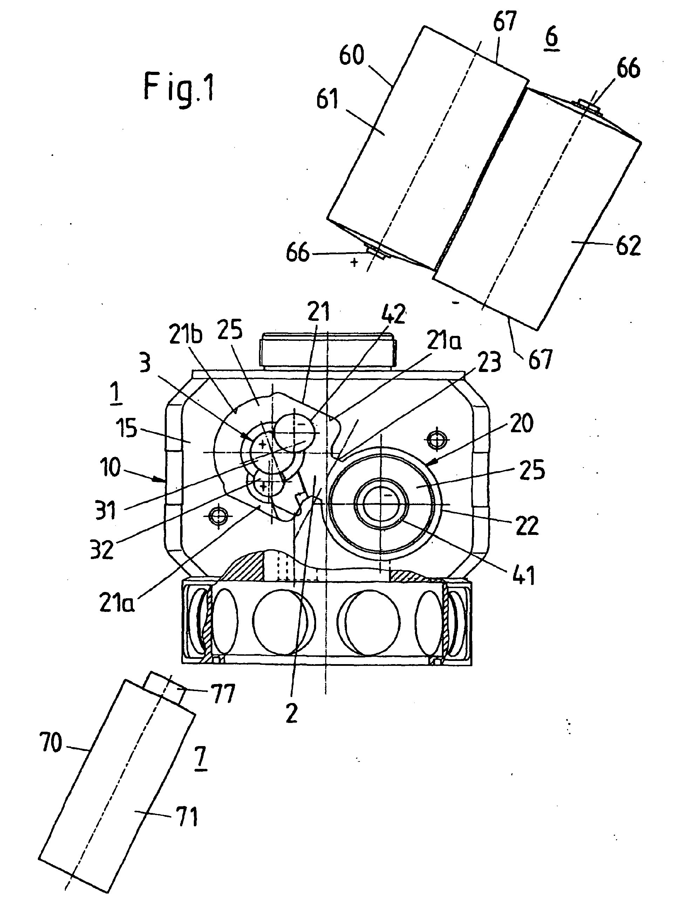

In Figur 1 ist von einem Messtaster 1 (schaltenden Taster) der eingangs beschriebenen Art (vergl. hierzu auch EP 0 742 422 A1, auf die voll inhaltlich Bezug genommen wird) ein Gehäuse 10 dargestellt, das in einem Gehäusebereich 15 eine Batterieaufnahme 2 zur Aufnahme einer Batterieanordnung 6 oder 7 aufweist. Diese Batterieanordnung dient zur Versorgung einer elektrisch betreibbaren Tasteinrichtung des Messtasters mit elektrischer Energie.

Die Tasteinrichtung kann beispielsweise gemäß der EP 0 742 422 A1 durch ein auslenkbares Tastelement mit einer zugeordneten Lichtschrankenanordnung zur Detektion der Auslenkung des Tastelementes gebildet werden. Die Batterieanordnung kann zusätzlich auch zur Versorgung einer elektrischen oder optischen Schnittestelleneinheit des Messtasters dienen, mit der Ausgangssignale der Tasteinrichtung (Antastsignal und ggf. weitere Informationen) an eine externe Einheit übertragbar sind. Eine geeignete optische Schnittstelle besteht z.B. aus mehreren Leuchtdioden, die aufgrund des Ausgangssignales moduliert werden und eine entsprechend modulierte Infrarotstrahlung aussenden. Darüber hinaus können mit der Batterieanordnung auch zum Empfang externer Signale dienende Empfänger betrieben werden.

Die umlaufende Begrenzungswand 20 der Batterieaufnahme 2 ist im Wesentlichen untergliedert in drei Abschnitte: In einem ein erstes Batteriefach 21 definierenden Abschnitt weist die Begrenzungswand 20 einerseits Bereiche 21a auf, in denen die Begrenzungswand an die Aufnahme einer Batterie 71 mit einem mehreckigen Querschnitt angepasst ist, und andererseits einen Bereich 21b, in dem die Begrenzungswand an die formschlüssige Aufnahme einer zylindrischen Batterie mit kreisförmigem Querschnitt angepasst ist. Ein zweiter Abschnitt der Begrenzungswand 20 definiert ein zylindrisches Batteriefach und die beiden Batteriefächer 21, 22 sind über einen durch einen weiteren Abschnitt der Begrenzungswand gebildeten Verbindungsbereich 23 miteinander verbunden.

Im Bodenbereich 25 des ersten Batteriefaches 21 ist ein elektrischer Anschluss 3, vorgesehen, der zwei Kontaktbereiche 31, 32 aufweist, die jeweils zur Kontaktierung des Plus-Poles einer Batterieanordnung vorgesehen sind. Die beiden Kontaktbereiche 31, 32 sind nebeneinander angeordnet, so dass mit dem elektrischen Anschluss 3 der jeweilige Plus-Pol zweier Batterieanordnungen mit unterschiedliche Lage des entsprechenden elektrischen Kontaktes kontaktiert werden kann. Auf dem aus einem metallischen Material bestehenden Boden 25 des ersten Batteriefaches 21 ist ferner ein Kontaktbereich 42 vorgesehen, über den der Minus-Pol einer Batterieanordnung mit dem aus Metall bestehenden Gehäuse 10 des Messtasters 1 kontaktierbar ist. In dem zweiten Batteriefach 22 ist ein weiterer Kontaktbereich 41 zur Kontaktierung des Minus-Pols einer anderen Batterieanordnung durch Herstellung einer leitenden Verbindung mit dem Gehäuse 10 vorgesehen.

In Figur 1 sind ferner die beiden Batterieanordnungen 6, 7 dargestellt, die wahlweise in die Batterieaufnahme 2 des Gehäuses 10 eingefügt werden können.

Die erste Batterieanordnung 6 besteht aus zwei zylindrischen Batterien 61, 62, die jeweils an einer Stirnseite einen den Plus-Pol bildenden elektrischen Kontakt 66 und an der anderen, gegenüberliegenden Stirnseite einen den Minus-Pol bildenden Kontakt 67 aufweisen. Diese beiden Batterien 61, 62 bilden eine Batterieanordnung 6 mit einer durch die zylindrische Form der Batterien 61, 62 vorgegebenen äußeren Kontur 60, die in die Batterieaufnahme 2 einsetzbar ist, indem jede der beiden Batterien 61, 62 in eines der beiden Batteriefächer 21, 22 eingesetzt wird. Bei den beiden zylindrischen Batterien 61, 62 der ersten Batterieanordnung 6 kann es sich insbesondere um 3,6 Volt-Lithium-Batterien mit besonders großer Lebensdauer handeln.

Die andere Batterieanordnung 7 wird gebildet durch eine einzelne 9 Volt-Standardbatterie 71 (9 Volt-Batterieblock), die auch als Akku ausgebildet sein kann. Diese Batterieanordnung 7 weist eine im Querschnitt rechteckige Kontur 70 und zwei auf derselben Stirnseite angeordnete elektrische Kontakte 76, 77 auf, die einen Plus-Pol sowie einen Minus-Pol bilden, vergleiche auch Figur 3.

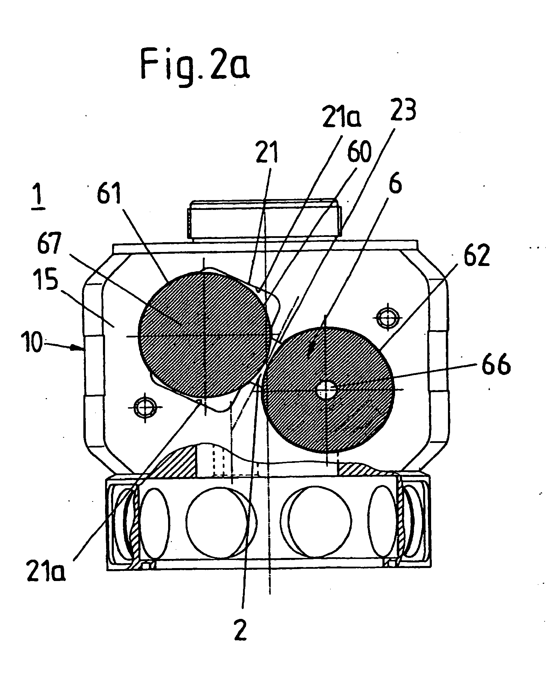

Figur 2a zeigt das Gehäuse 10 eines Messtasters 1 gemäß Figur 1 in einem Zustand, in dem die beiden die erste Batterieanordnung 6 bildenden zylindrischen Batterien 61, 62 in die Batterieaufnahme 2 eingefügt sind. Hierbei sind die beiden Batterien 61, 62 formschlüssig in je einem der Batteriefächer 21, 22 aufgenommen, wobei die eine Batterie 61 insbesondere an dem im Querschnitt kreissegmentförmigen Abschnitt 21b des ersten Batteriefaches anliegt und die andere Batterie 62 in dem zweiten Batteriefach im Wesentlichen mit ihrer gesamten Mantelfläche an der im Querschnitt kreisförmigen Wand des Batteriefaches 22 anliegt.

Die in dem ersten Batteriefach 21 befindliche Batterie 61 kontaktiert mit ihrem in Richtung auf den Boden 25 des Batteriefaches 21 weisenden und den Plus-Pol bildenen elektrischen Kontakt 66 einen zugeordneten Kontaktbereich 31 des zur Kontaktierung des Plus-Pols vorgesehenen elektrischen Anschlusselementes 3. Die andere Batterie 62 steht über einen hierfür vorgesehenen Kontaktbereich 41 mit dem aus metallischem Material bestehenden Boden 25 des zweiten Batteriefaches 22 und damit mit dem Gehäuse 10 des Messtasters 1 in elektrisch leitender Verbindung. Der Minus-Pol der Batterieanordnung 6 wird demnach mit dem Gehäuse 10 des Messtasters 1 kontaktiert.

Die beiden weiteren, dem Boden 25 der Batterieaufnahme 2 abgewandten elektrischen Kontakte 67, 66 der beiden Batterien 61, 62 werden beim Verschließen der Batterieaufnahme mittels eines Deckels (vergleiche Figur 5a) über eine Kontaktbrücke 17 miteinander verbunden, so dass die beiden Batterien 61, 62 in Reihe geschaltet sind.

Im Ergebnis ist also jede der beiden Batterien 61, 62 der ersten Batterieanordnung 6 in eines der beiden Batteriefächer 21, 22 der Batterieaufnahme eingefügt und die beiden Batterien 61, 62 sind hierbei in Reihe geschaltet. Der den Plus-Pol der einen Batterie 61 bildende elektrische Kontakt 66 ist dabei mit einem zugeordneten Kontaktbereich 31 eines elektrischen Anschlusselementes 3 der Batterieaufnahme 2 elektrisch kontaktiert und der den Minus-Pol der anderen Batterie 62 bildende elektrische Kontakt 67 ist über den Boden 25 der Batterieaufnahme 2 elektrisch mit dem metallischen Gehäuse 10 des Messtasters 1 kontaktiert.

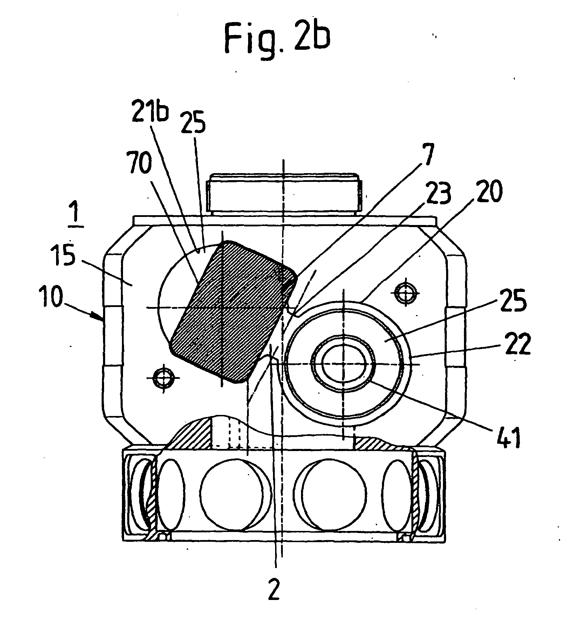

Wahlweise kann gemäß Figur 2b anstelle der vorstehend beschriebenen ersten Batterieanordnung 6 auch eine aus einem einzelnen, im Querschnitt im Wesentlichen rechteckigen Batterieblock bestehende Batterieanordnung 7 in die Batterieaufnahme 2 des Messtasters 1 eingesetzt werden, und zwar in deren erstes Batteriefach 21. Die den zweiten Batterieblock 7 bildende Batterie 71 liegt dann mit ihrer im Querschnitt rechteckigen äußeren Kontur 70 insbesondere an denjenigen Wandabschnitten 21a des ersten Batteriefaches 21 an, die zur Aufnahme einer im Querschnitt rechteckigen Batterie (mit abgerundeten Kanten) ausgebildet sind. Hierdurch lässt sich auch diese zweite Batterieanordnung 7 formschlüssig in der Batterieaufnahme 2, und zwar in deren erstem Batteriefach 21 aufnehmen.

In diesem Zustand weisen beide elektrische Kontakte 76, 77 der Batterie 71 in Richtung auf den Boden 25 des ersten Batteriefaches 21. Der den Plus-Pol bildende elektrische Kontakt 76 kontaktiert dabei einen zweiten Kontaktbereich 32 des zum Anschluss des Plus-Poles der jeweiligen Batterieanordnung vorgesehenen elektrischen Anschlusselementes 3 der Batterieaufnahme 2. Dieser Kontaktbereich 32 ist dem zuvor beschriebenen Kontaktbereich 31 unmittelbar benachbart, der zur Kontaktierung des Plus-Poles der ersten Batterieanordnung 6 dient.

Darüber hinaus weist das erste Batteriefach 21 einen Kontaktbereich 42 auf, über den der den Minus-Pol bildende elektrische Kontakt 77 der Batterie 71 mit dem Gehäuse 10 des Messtasters 1 elektrisch kontaktierbar ist.

Im Ergebnis lässt sich also auch die durch einen im Querschnitt rechteckförmigen 9 Volt-Batterieblock gebildete zweite Batterieanordnung 7 formschlüssig in die Batterieaufnahme 2 des Gehäuses 10 des Messtasters 1 einsetzen, wobei die beiden elektrischen Kontakte 76, 77 der entsprechenden Batterie 71 jeweils im Bodenbereich des ersten Batteriefaches 21 der Batterieaufnahme 2 elektrisch kontaktiert sind. Der den Plus-Pol bildende Kontakt 76 der Batterie 71 ist mit einem Kontaktbereich 32 eines elektrischen Anschlusselementes 3 elektrisch leitend verbunden und der den Minus-Pol bildende elektrische Kontakt 77 mit dem Gehäuse 10 des Messtasters 1.

Durch die Kontaktierung des Minus-Poles beider Batterieanordnungen 6, 7 mit dem Bodenbereich 25 der Batterieaufnahme 2 ist es nicht erforderlich, dass auch die umlaufende Wand 20 der Batterieaufnahme aus einem metallischen Material besteht. Vielmehr kann die umlaufende Begrenzungswand 20 der Batterieaufnahme 2 auch durch eine Kunststoffeinlage in dem Gehäuse 10 definiert werden. Von Bedeutung ist allein, dass derjenige Teil der Batterieaufnahme (vorliegend deren Boden 25), der zur elektrischen Kontaktierung des Minus-Poles der jeweiligen Batterieanordnung dient, aus einem metallischen Material besteht.

## Patentansprüche

1. Messtaster mit
- einer elektrisch betreibbaren Tasteinrichtung zum Abtasten eines Messobjektes und
zur Erzeugung eines Ausgangssignale sowie
- einer Batterieaufnahme (2), die elektrische Anschlüsse zur Kontaktierung elektrischer Kontakte (66, 67; 76, 77) einer Batterieanordnung (6, 7) aufweist, mittels der die Tasteinrichtung betreibbar ist,
**dadurch gekennzeichnet,**
**dass** die Batterieaufnahme (2) ausgebildet und vorgesehen ist zur wahlweisen formschlüssigen Aufnahme jeweils einer von zwei unterschiedlichen Batterieanordnungen (6, 7), die sich hinsichtlich der räumlichen Anordnung der elektrischen Kontakte (66, 67; 76, 77) und hinsichtlich ihrer äußeren Form unterscheiden und von denen die erste Batterieanordnung (6) aus zwei Batterien besteht und die zweite Batterieanordnung (7) aus einer Batterie (71) besteht, indem die Kontur der Batterieaufnahme (2) abschnittsweise an die äußere Form der einen Batterieanordnung (6) und abschnittsweise an die äußere Form der anderen Batterieanordnung (7) angepasst ist, derart, dass die Batterieaufnahme (2) zwei Batteriefächer (21, 22) aufweist, von denen das eine zur wahlweisen Aufnahme einer Batterie (61) der ersten Batterieanordnung (6) oder der Batterie (71) der zweiten Batterieanordnung (7) und das andere ausschließlich zur Aufnahme einer Batterie (62) der ersten Batterieanordnung (6) eingerichtet ist und sowohl die eine als auch die andere Batterieanordnung (6, 7) formschlüssig in die Batterieaufnahme (2) einsetzbar ist.

2. Messtaster nach Anspruch 1, **dadurch gekennzeichnet, dass** die Batterieaufnahme (2) eingerichtet ist zur Aufnahme von jeweils genau einer der unterschiedlichen Batterieanordnungen (6, 7).

3. Messtaster nach Anspruch 1 oder 2, **dadurch gekennzeichnet, dass** die erste Batterieanordnung (6) durch zwei 3,6-Volt-Batterien gebildet wird.

4. Messtaster nach einem der vorhergehenden Ansprüche, **dadurch gekennzeichnet, dass** die zweite Batterieanordnung (7) durch eine 9 Volt-Batterie gebildet wird.

5. Messtaster nach einem der vorhergehenden Ansprüche, **dadurch gekennzeichnet, dass** die Batterieaufnahme (2) eingerichtet ist zur wahlweisen Aufnahme einer Batterieanordnung (6) mit einer gekrümmten äußeren Kontur oder einer Batterie-Anordnung (7) mit einem wesentlichen mehreckigen Querschnitt.

6. Messtaster nach Anspruch 5, **dadurch gekennzeichnet, dass** die Kontur des einen Batteriefaches (21) eingerichtet ist zur wahlweisen Aufnahme einer Batterie (71) mit einem vieleckigen, insbesondere rechteckigen, Querschnitt und einer Batterie (61) mit einem kreisförmigen Querschnitt.

7. Messtaster nach einem der vorhergehenden Ansprüche, **dadurch gekennzeichnet, dass** mindestens ein elektrischer Anschluss (3, 3') der Batterieaufnahme (2) mindestens zwei Anschlussbereiche (31, 32; 31', 32') aufweist, von denen jeder zur Kontaktierung eines elektrischen Kontaktes (66, 76) einer anderen Batterieanordnung (6, 7) dient, und dass die Anschlussbereiche dem gleichen Pol, insbesondere dem Plus-Pol, der jeweiligen Batterieanordnung (6, 7) zugeordnet sind.

8. Messtaster nach Anspruch 7, **dadurch gekennzeichnet, dass** der elektrische Anschluss (3, 3') durch eine elektrische Kontaktplatte mit zwei Kontaktbereichen (31, 32; 31', 32') gebildet wird.

9. Messtaster nach Anspruch 7 oder 8, **dadurch gekennzeichnet, dass** die beiden Anschlussbereiche (31, 32; 31', 32') des elektrischen Anschlusses (3, 3') über dasselbe Kabel mit der Tasteinrichtung verbunden sind.

10. Messtaster nach einem der Ansprüche 7 bis 9, **dadurch gekennzeichnet, dass** der eine Anschlussbereich (31, 31') zur Kontaktierung eines elektrischen Kontaktes (66) der aus zwei Batterien (61, 62) bestehenden Batterieanordnung (6) und der andere Anschlussbereich (32, 32') zur Kontaktierung eines elektrischen Kontaktes (76) der aus einer Batterie (71) bestehenden Batterieanordnung (7) dient, wobei die beiden elektrischen Kontakte (66, 67) der Batterieanordnungen (6, 7) jeweils den gleichen elektrischen Pol definieren.

11. Messtaster nach einem der vorhergehenden Ansprüche **dadurch gekennzeichnet, dass** eine Wand (25) der Batterieaufnahme (2) in der Umgebung eines elektrischen Anschlusses (3') eine Vertiefung (46) aufweist, in die ein Abschnitt (77) einer Batterieanordnung (7) einführbar ist, um eine zuverlässige elektrische Kontaktierung zwischen der Batterieanordnung (7) und dem elektrischen Anschluss (3) sicherzustellen.

12. Messtaster nach einem der vorhergehenden Ansprüche, **dadurch gekennzeichnet, dass** eine elektrischer Anschluss (3') der Batterieaufnahme (2) von einem isolierenden Element (35) umgeben ist.

13. Messtaster nach einem der vorhergehenden Ansprüche, **dadurch gekennzeichnet, dass** Mittel (54, 59) vorgesehen sind, die eine Verpolung der Batterieanordnung (7) verhindern sollen.

14. Messtaster nach einem der vorhergehenden Ansprüche, **dadurch gekennzeichnet, dass** die Wand (20, 25) der Batterieaufnahme (2) zumindest teilweise aus Metall besteht und dass ein elektrischer Kontakt (67, 77) der jeweiligen Batterieanordnung (6, 7), insbesondere der den Minus-Pol definierende Kontakt, mit der Wand (20, 25) elektrisch leitend verbunden ist.

15. Messtaster nach Anspruch 14, **dadurch gekennzeichnet, dass** der elektrische Kontakt (67, 77) über ein elektrisches Verbindungselement, insbesondere eine Kontaktfeder (56), mit der Wand (20, 25) der Batterieaufnahme (2) verbunden ist.

## Claims

1. A caliper comprising
- an electrically operable sensor for scanning a measured object and for generating an output signal as well as
- a battery accommodation (2), which encompasses electric connections for contacting electric contacts (66, 67; 76, 77) of a battery assembly (6, 7), by means of which the sensor can be operated,
**characterized in**
**that** the battery accommodation (2) is embodied and provided for selectively positively accommodating one of two different battery assemblies (6, 7) in each case, which differ with respect to the spatial arrangement of the electric contacts (66, 67; 76, 77) and with respect to their outer form and the first battery assembly (6) of which consists of two batteries and the second battery assembly (7) consists of one battery (71), in that the contour of the battery accommodation (2) is adapted in sections to the outer form of the one battery assembly (6) and in sections to the outer form of the other battery assembly (7) in such a manner that the battery accommodation (2) encompasses two battery compartments (21, 22), the one of which is equipped to selectively accommodate a battery (61) of the first battery assembly (6) or the battery (71) of the second battery assembly (7) and the other one of which is equipped exclusively to accommodate a battery (62) of the first battery assembly (6) and the one as well as the other battery assembly (6, 7) can be inserted into the battery accommodation (2) in a positive manner.

2. The caliper according to claim 1, **characterized in that** the battery accommodation (2) is equipped to accommodate exactly one of the different battery assemblies (6, 7) in each case.

3. The caliper according to claim 1 or 2, **characterized in that** the first battery assembly (6) is formed by two 3.6 volt batteries.

4. The caliper according to one of the preceding claims, **characterized in that** the second battery assembly (7) is formed by one 9 volt battery.

5. The caliper according to one of the preceding claims, **characterized in that** the battery accommodation (2) is equipped to selectively accommodate a battery assembly (6) with a curved outer contour or a battery assembly (7) comprising a substantially polygonal cross section.

6. The caliper according to claim 5, **characterized in that** the contour of the one battery compartment (21) is equipped to selectively accommodate a battery (71) with a polygonal, in particular rectangular cross section and a battery (61) comprising a circular cross section.

7. The caliper according to one of the preceding claims, **characterized in that** at least one electric connection (3, 3') of the battery accommodation (2) encompasses at least two connection areas (31, 32; 31', 32'), each of which serves to contact an electric contact (66, 76) of another battery assembly (6, 7) and **in that** the connecting areas are assigned to the same pole, in particular to the positive pole of the respective battery assembly (6, 7).

8. The caliper according to claim 7, **characterized in that** the electric connection (3, 3') is formed by an electric contact plate comprising two contact areas (31, 32; 31', 32').

9. The caliper according to claim 7 or 8, **characterized in that** the two connecting areas (31, 32; 31', 32') of the electric connection (3, 3') are connected to the sensor via the same cable.

10. The caliper according to one of claims 7 to 9, **characterized in that** the one connecting area (31, 31') serves to contact an electric contact (66) of the battery assembly (6) consisting of two batteries (61, 62) and the other connecting area (32, 32') serves to contact an electric contact (76) of the battery assembly (7) consisting of one battery (71), wherein the two electric contacts (66, 67) of the battery assemblies (6, 7) in each case define the same electric pole.

11. The caliper according to one of the preceding claims, **characterized in that** a wall (25) of the battery accommodation (2) in the surroundings of an electric connection (3') encompasses a recess (46), into which a section (77) of a battery assembly (7) can be inserted, so as to ensure a reliable electric contacting between the battery assembly (7) and the electric connection (3).

12. The caliper according to one of the preceding claims, **characterized in that** an electric connection (3') of the battery accommodation (2) is surrounded by an insulating element (35).

13. The caliper according to one of the preceding claims, **characterized in that** provision is made for means (54, 59), which are to prevent a reverse polarity of the battery assembly (7).

14. The caliper according to one of the preceding claims, **characterized in that** the wall (20, 25) of the battery accommodation (2) consists at least partially of metal and that an electric contact (67, 77) of the respective battery assembly (6, 7), in particular the contact defining the negative pole, is connected to the wall (20, 25) so as to be electroconductive.

15. The caliper according to claim 14, **characterized in that** the electric contact (67, 77) is connected to the wall (20, 25) of the battery accommodation (2) via an electric connecting element, in particular a contact spring (56).

## Revendications

1. Palpeur de mesure avec
- un dispositif palpeur actionnable électriquement, pour palper un objet à mesurer et pour produire un signal de sortie, et
- un compartiment à batterie (2) comportant des connexions électriques pour l'interconnexion électrique de contacts (66, 67 ; 76, 77) d'un bloc de batterie (6, 7), permettant de faire fonctionner le dispositif palpeur,
**caractérisé en ce que** le compartiment à batterie (2) est conçu et prévu pour le logement par complémentarité de forme d'un de deux blocs de batterie différents (6, 7) au choix, qui se distinguent quant à l'agencement spatial des contacts électriques (66, 67 ; 76, 77) et quant à leur forme extérieure, et parmi lesquels le premier bloc de batterie (6) est constitué de deux batteries et le deuxième bloc de batterie (7) est constitué d'une batterie (71), en adaptant le contour du compartiment à batterie (2) par sections à la forme extérieure de l'un des blocs de batterie (6) et par sections à la forme extérieure de l'autre bloc de batterie (7), de telle manière que le compartiment à batterie (2) comporte deux logements de batterie (21, 22), parmi lesquels l'un est aménagé pour l'admission au choix d'une batterie (61) du premier bloc de batterie (6) ou de la batterie (71) du deuxième bloc de batterie (7), et l'autre est aménagé exclusivement pour l'admission d'une batterie (62) du premier bloc de batterie (6), et de telle manière qu'aussi bien l'un que l'autre des blocs de batterie (6, 7) peut être inséré par complémentarité de forme dans le compartiment à batterie (2).

2. Palpeur de mesure selon la revendication 1, **caractérisé en ce que** le compartiment à batterie (2) est aménagé exactement pour l'admission de l'un des différents blocs de batterie (6, 7).

3. Palpeur de mesure selon la revendication 1 ou 2, **caractérisé en ce que** le premier bloc de batterie (6) est formé par deux batteries de 3,6 Volts.

4. Palpeur de mesure selon l'une des revendications précédentes, **caractérisé en ce que** le deuxième bloc de batterie (7) est formé par une batterie de 9 Volts.

5. Palpeur de mesure selon l'une des revendications précédentes, **caractérisé en ce que** le compartiment à batterie (2) est aménagé pour l'admission au choix d'un bloc de batterie (6) avec un contour extérieur courbé ou d'un bloc de batterie (7) avec une section transversale essentiellement polygonale.

6. Palpeur de mesure selon la revendication 5, **caractérisé en ce que** le contour de l'un des logements de batterie (21) est aménagé pour l'admission au choix d'une batterie (71) avec une section transversale polygonale, en particulier rectangulaire, et d'une batterie (61) avec une section transversale circulaire.

7. Palpeur de mesure selon l'une des revendications précédentes, **caractérisé en ce qu'**au moins une connexion électrique (3, 3') du compartiment à batterie (2) comporte au moins deux zones de connexion (31, 32 ; 31', 32'), parmi lesquelles chacune sert à l'interconnexion d'un contact électrique (66, 76) d'un autre bloc de batterie (6, 7), et **en ce que** les zones de connexion sont attribuées à la même borne, en particulier à la borne positive, de chacun des blocs de batterie (6, 7).

8. Palpeur de mesure selon la revendication 7, **caractérisé en ce que** la connexion électrique (3, 3') est formée par une plaquette de contact électrique, avec deux zones de connexion (31, 32 ; 31', 32').

9. Palpeur de mesure selon la revendication 7 ou 8, **caractérisé en ce que** les deux zones de connexion (31, 32 ; 31', 32') de la connexion électrique (3, 3') sont reliées au dispositif palpeur par le même câble.

10. Palpeur de mesure selon l'une des revendications 7 à 9, **caractérisé en ce que** l'une des zones de connexion (31, 31') sert à l'interconnexion d'un contact électrique (66) du bloc de batterie (6) constitué de deux batteries (61, 62), et l'autre zone de connexion (32, 32') sert à l'interconnexion d'un contact électrique (76) du bloc de batterie (7) constitué d'une batterie (71), dans lequel les deux connexions électriques (66, 67) des blocs de batterie (6, 7) définissent respectivement la même borne électrique.

11. Palpeur de mesure selon l'une des revendications précédentes, **caractérisé en ce qu'**une paroi (25) du compartiment à batterie (2) comporte un renfoncement (46) à proximité d'une connexion électrique (3'), dans laquelle une section (77) d'un bloc de batterie (7) peut être inséré afin de garantir une interconnexion électrique fiable entre le bloc de batterie (7) et la connexion électrique (3).

12. Palpeur de mesure selon l'une des revendications précédentes, **caractérisé en ce qu'**une connexion électrique (3') du compartiment à batterie (2) est entourée par un élément isolant (35).

13. Palpeur de mesure selon l'une des revendications précédentes, **caractérisé en ce qu'**il est prévu des moyens (54, 59) destinés à empêcher une inversion de polarité du bloc de batterie (7).

14. Palpeur de mesure selon l'une des revendications précédentes, **caractérisé en ce que** la paroi (20, 25) du compartiment à batterie (2) est au moins partiellement constituée de métal, et **en ce qu'**un contact électrique (67, 77) de chacun des blocs de batterie (6, 7), en particulier le contact définissant la borne négative, est relié de façon électriquement conductrice à la paroi (20, 25).

15. Palpeur de mesure selon la revendication 14, **caractérisé en ce que** le contact électrique (67, 77) est relié à la paroi (20, 25) du compartiment à batterie (2) par un élément de connexion électrique, en particulier un ressort de contact (56).
